# EUROPÄISCHE PATENTSCHRIFT

(11) **EP 0 866 751 B1**
(45) Veröffentlichungstag und Bekanntmachung des Hinweises auf die Patenterteilung: **15.09.1999**
(21) Anmeldenummer: 96943088.3
(22) Anmeldetag: 11.12.1996
(51) Int. Cl.: B60C 23/04

(54) **VERFAHREN ZUM BETREIBEN VON EINRICHTUNGEN AN RÄDERN MIT LUFTREIFEN ZUM SIGNALISIEREN DES REIFENDRUCKS**
METHOD OF OPERATING TYRE PRESSURE SIGNALLING DEVICES ON WHEELS FITTED WITH PNEUMATIC TYRES
PROCEDE PERMETTANT DE FAIRE FONCTIONNER DES DISPOSITIFS PLACES SUR DES ROUES POURVUES DE PNEUMATIQUES POUR INDIQUER LA PRESSION DES PNEUMATIQUES

(30) Priorität: 12.12.1995 DE 19546316; 25.01.1996 DE 19602593
(43) Veröffentlichungstag der Anmeldung: 30.09.1998
(73) Patentinhaber: AMI DODUCO GmbH, 75181 Pforzheim (DE)
(72) Erfinder: UHL, Günter, D-74921 Helmstadt-Bargen (DE); SCHULZE, Gunter, D-75228 Ispringen (DE); NORMANN, Norbert, D-75223 Niefern-Öschelbronn (DE)
(74) Vertreter: Twelmeier, Ulrich, Dipl. Phys.
(86) Internationale Anmeldenummer: EP9605544
(87) Internationale Veröffentlichungsnummer: WO9721557

(56) Entgegenhaltungen:
- US-A- 5 054 315
- US-A- 5 109 213
- US-A- 5 231 872
- US-A- 5 285 189

## Beschreibung

Die Erfindung geht aus von einem Verfahren mit den im Oberbegriff des Anspruchs 1 angegebenen Merkmalen. Ein solches Verfahren ist aus der DE-43 03 583 A1 bekannt. Diese Druckschrift offenbart eine Einrichtung mit einer im Ventil des Luftreifens angeordneten Einrichtung zur Erzeugung eines drahtlos übermittelbaren Druckabnahme-Anzeigesignals mit einer Batterie als Stromquelle, mit einem vorzugsweise halbleitenden, piezo-resistiven Drucksensor, mit einem Analog-Digital-Wandler zum Digitalisieren des vom Drucksensor gewonnenen Drucksignals, mit einem Speicher zum Speichern des Drucksignals, mit einem Vergleicher, welcher das Drucksignal mit einem vorher gespeicherten Vergleichsdrucksignal vergleicht, mit einem Sender und mit einem Zeitschalter, welcher die Einrichtung von Zeit zu Zeit aktiviert und im übrigen zum Zwecke der Stromeinsparung abgeschaltet hält. Der Analog-Digital-Wandler, der Speicher, der Vergleicher und der Zeitschalter sind vorzugsweise in Baueinheit mit einem Mikroprozessor verwirklicht, welcher das von Drucksensor gelieferte Drucksignal mit dem vorher gespeicherten Vergleichsdrucksignal vergleicht, ein Signal erzeugt, wenn die Abweichung des Drucksignals vom Vergleichsdrucksignal einen Schwellenwert überschreitet und dann einen Sender aktiviert, welcher daraufhin eine Information über die festgestellte Abweichung an ein im Fahrzeug, insbesondere im Bereich des Armaturenbretts, angeordnetes Empfangsgerät mit Auswerteschaltung und Anzeigeeinheit funkt, welches die Information verarbeitet und dem Fahrer anzeigt, in welchem Luftreifen der Luftdruck signifikant vom Vergleichsdurck abweicht. Als Vergleichsdruck wird der Solldruck des Luftreifens dauerhaft jedesmal dann gespeichert, wenn an einer Tankstelle der Luftdruck mit Hilfe eines externen Manometers überprüft und mittels einer Druckluftquelle auf seinen Sollwert eingestellt wird. Zu diesem Zweck wird die Bewegung des Ventilstößels automatisch überwacht, z.B. mittels eines am Ventilstößel angebrachten Magneten, der bei Bewegung des Ventilstößels seinerseits einen Magnetschalter betätigt. Erkennt die Einrichtung eine Bewegung des Ventilstößels, wird der danach gemessene Reifendruck als Vergleichsdruck (Solldruck) gespeichert. Vor dem erstmaligen Einsatz in einem Luftreifen kann der Überwachungseinrichtung vom Hersteller ein Solldruck vorgegeben und eingespeichert werden.

Die praktische Verwendbarkeit einer solchen Einrichtung zur Reifendrucküberwachung hängt davon ab, daß die Einrichtung so wenig Strom verbraucht, daß sie ohne Batteriewechsel über mehrere Jahre betriebsbereit ist. Den größten Stromverbrauch hat der Sender. Bei der bekannten Einrichtung wird er nur dann aktiviert, wenn die Abweichung des gemessenen Reifendrucks vom Sollwert einen vorgegebenen Schwellenwert überschreitet. Im übrigen wird der Druck nicht ständig, sondern nur in regelmäßigen Abständen, beispielsweise alle 3 oder 4 Sekunden gemessen und mit dem Sollwert verglichen, der ein Absolutwert ist.

Automobilhersteller fordern für solche bevorzugt am Ventil von Fahrzeugrädern vorgesehene elektronische Überwachungseinrichtungen eine Lebensdauer ohne Batteriewechsel von mindestens 5 Jahren. Mit modernen Batterien und der Verwendung von integrierten Schaltkreisen mit einer Stromaufnahme von weniger als 1 µA läßt sich eine solche Lebensdauer heute annähernd erreichen. Schwierigkeiten ergeben sich jedoch dann, wenn die elektronischen Reifendrucküberwachungseinrichtungen einige Zeit auf Lager liegen, bevor sie an einem Fahrzeug zum Einsatz kommen. Die Lagerzeit kann insbesondere auf dem Zubehör- und Ersatzteilemarkt einige Wochen bis zu 2 Jahre betragen. Da die elektronische Reifendrucküberwachungseinrichtung aber bereits mit dem Einsetzen der Batterie beim Hersteller aktiv wird, verkürzt sich die von der Batterielebensdauer bestimmte maximal mögliche Betriebszeit am Fahrzeug um die Lagerzeit.

Der vorliegenden Erfindung liegt die Aufgabe zugrunde, dieser Verkürzung der Betriebszeit der Reifendrucküberwachungseinrichtung am Fahrzeug entgegenzuwirken, ohne deren Betriebszuverlässigkeit zu verschlechtern.

Diese Aufgabe wird gelöst durch ein Verfahren mit den im Anspruch 1 angegebenen Merkmalen. Vorteilhafte Weiterbildungen der Erfindung sind Gegenstand der abhängigen Ansprüche.

Erfindungsgemäß wird die Reifendruck-Überwachungseinrichtung mit zwei verschiedenen Druck-Schwellenwerten betrieben: Wie beim Stand der Technik wird ein erster Schwellenwert Δp für die Abweichung des vom Drucksensor gemessenen Drucks vom Solldruck vorgegeben; wird der Schwellenwert Δp überschritten, dann wird der Sender der Reifendrucküberwachungseinrichtung aktiviert und der gemessene Druckwert oder seine Abweichung vom Sollwert an das im Fahrzeug vorgesehene zentrale Auswerte- und/oder Anzeigegerät gefunkt. Abweichungen, die den ersten Schwellenwert Δp nicht überschreiten, werden als unbeachtlich gewertet und nicht signalisiert. Erfindungsgemäß wird ferner eine zweite Druckschwelle, insbesondere eine Absolutdruckschwelle, vorgesehen; ist der gemessene Druck so niedrig, daßdiese zweite Druckschwelle unterschritten wird, dann wird das als Zustand "Rad ungenutzt" gewertet und der Funkbetrieb so lange eingestellt, bis der vom Drucksensor gemessene Druck die zweite Druckschwelle in umgekehrter Richtung überschreitet. Wird als zweite Druckschwelle ein Absolutdruck gewählt, so ist dieser so niedrig zu wählen, daß die im Normalbetrieb der Reifendrucküberwachungseinrichtung, insbesondere im Fahrbetrieb, aber auch die im Stand auftretenden Druckänderungen, sowohl schleichende Druckverluste, die Fahrsicherheit allmählich verschlechtern, als auch rasche Druckverluste, in jedem Fall signalisiert werden, bevor der Funkbetrieb eingestellt wird. Der vorgewählte Absolutdruck, bei dessen Unterschreiten der Funkbetrieb eingestellt wird, muß deshalb vom Solldruck, der im normalen Fahrbetrieb im Luftreifen herrschen soll, einen wesentlich größeren Abstand als Δp einhalten.

Man kann den vorgewählten Absolutdruck z.B. auf einen Wert einstellen, der etwas höher liegt als die üblicherweise auftretenden atmosphärischen Luftdrücke. In diesem Fall nimmt die Reifendrucküberwachungseinrichtung den Funkbetrieb nicht auf, solange sie nicht in ein Rad eingebaut und dessen Luftreifen aufgepumpt ist. Vorzugsweise wird der vorgewählte Absolutdruck, bei dessen Unterschreiten der Funkbetrieb eingestellt wird, jedoch deutlich höher eingestellt, insbesondere auf einen Wert von 1 bis 1,2 bar über dem atmosphärischen Luftdruck. Bei dieser Wahl der zweiten Druckschwelle hat man einerseits eine für praktisch alle Luftreifen an Automobilen passende Druckschwelle, die hinreichend weit unter dem Solldruck für den normalen Fahrbetrieb liegt; andererseits hat man den Vorteil, daß man in Nutzungspausen, die bei Winterreifen im Sommer sowie bei Sommerreifen im Winter auftreten, den Funkbetrieb willkürlich einstellen kann, indem man den Luftdruck im Reifen bis unter den vorgewählten Absolutdruck absenkt. Es verbleibt im Reifen ein ausreichender Luftdruck, um die Räder während der Dauer der Nichtnutzung (für die Sommerreifen über die Winterzeit und für die Winterreifen über die Sommerzeit) fachgerecht lagern zu können. Werden die Reifen am Jahreszeitenwechsel erneut gewechselt, muß der Reifendruck der dann am Fahrzeug zu montierenden Räder ohnehin frisch eingestellt werden, wodurch der Reifendruck den vorgewählten Absolutdruck wieder überschreitet und der Funkbetrieb wieder aufgenommen werden kann, um Druckabweichungen zu signalisieren, die den Schwellenwert Δp überschreiten.

Auf diese Weise kann auch in Zwischenlagerzeiten Strom gespart und bei abwechselnder Nutzung von Sommerreifen und Winterreifen die Batterielebensdauer über die geforderten 5 Jahre hinaus verlängert werden, u.U. bis zur doppelten Lebensdauer.

Vorteilhaft ist die Erfindung insbesondere bei einer Betriebsweise, bei welcher die Reifendrucküberwachungseinrichtung nicht nur dann ein Signal funkt, wenn die Abweichung des Reifendrucks vom Solldruck den vorgegebenen Schwellenwert Δp überschreitet, sondern auch darüberhinaus in regelmäßigen Abständen, z.B. in Abständen von 1 Minute, ein Signal an das zentrale Auswerte- und Anzeigegerät funkt, um diesem die andauernde Betriebsbereitschaft zu signalisieren; durch diese Betriebsart wird sichergestellt, daß auch Fehlfunktionen der Reifendrucküberwachungseinrichtung erkannt werden können, insbesondere ein Totalausfall. Die Funksignale, die die Betriebsbereitschaft anzeigen, tragen jedoch wesentlich zum Energieverbrauch bei, und deshalb ist es von besonderem Vorteil, wenn man erfindungsgemäß das Funken der Betriebsbereitschaftssignale während Zeiten der Lagerung abstellen kann.

Die alternative Möglichkeit, Reifendrucküberwachungseinrichtungen durch einen gesonderten Schalter im Strompfad zwischen Batterie und Elektronik nach Bedarf einzuschalten oder abzuschalten, hat den Nachteil, daß dadurch eine Fehlerquelle eingeführt wird, die die Betriebszuverlässigkeit vermindert, zumal unter den schwierigen Einsatzbedingungen am Fahrzeugrad (Temperaturwechsel, Lastwechsel, Erschütterungen, hohe Zentrifugalbeschleunigungen). Das erfindungsgemäße Verfahren hat demgegenüber den Vorteil, daß es keinerlei umgestaltende Eingriffe in die Reifendrucküberwachungseinrichtung erfordert.

In einer vorteilhaften Betriebsart wird in der Reifendrucküberwachungseinrichtung als Vergleichsdrucksignal nicht ein absoluter Sollwert des Luftdrucks gespeichert; demgemäß wird dann auch nicht die Abweichung des aktuellen Reifendrucks vom Sollwert festgestellt und signalisiert, sondern vielmehr eine Drift des Reifendrucks erfaßt und signalisiert und zu diesem Zweck das Vergleichsdrucksignal laufend angepaßt. Im einfachsten Fall wird der aktuell gemessene Druck als Vergleichsdruck gespeichert und bei der nächsten Druckmessung der dann aktuelle Druck mit dem zuvor gespeicherten Vergleichsdruck verglichen. Um zufällige Meßfehler auszugleichen und unnötige Aktivierungen des Senders zu vermeiden, ist es jedoch vorteilhaft, das Vergleichsdrucksignal nicht aus dem letzten zuvor vom Drucksensor gelieferten Drucksignals zu bilden, sondern aus mehreren vorher vom Sensor gelieferten Drucksignalen, z.B. durch Mittelwertbildung aus jeweils den letzten drei gemessenen und gespeicherten Drucksignalen.

Um eine solche Arbeitsweise zu ermöglichen, enthalt die Überwachungseinrichtung vorzugsweise einen Mikroprozessor oder einen ASIC.

Diese besondere Arbeitsweise hat Vorteile:
- Änderungen des Reifendrucks, die so langsam erfolgen, daß sie ungefährlich sind, führen nicht in jedem Fall zu einem Aktivieren des Senders. Das gilt insbesondere für Druckänderungen, die durch Temperaturänderungen verursacht sind. Diese Änderungen laufen so langsam ab, daß trotz eines niedrigen Schwellenwertes für die Druckabweichung (gegenwärtig ist mit vertretbarem Aufwand eine Druckschwelle zwischen 10 und 100 mbar möglich) und einer periodischen Druckmessung in Zeitabständen, die optimal zwischen 1 Sekunde und 10 Sekunden liegen, auch ohne daß eine Temperaturkompensation der Druckmessung erforderlich wäre, temperaturbedingte Druckänderungen nicht zu einem Einschalten des Senders führen. Das vereinfacht den Aufbau der Überwachungseinrichtung im Ventil und schont die Batterie.
- Eine Drift infolge unvermeidlicher Diffusion von Luft aus dem Reifen heraus, welche bei weitem die häufigste Ursache dafür ist, daß Luft in einen Reifen nachgefüllt werden muß, verläuft ebenfalls so langsam, daß sie nicht zu einem Aktivieren des Senders führt, Beim Stand der Technik ist das anders: Wenn dort durch allmähliche, stetige Diffusion der Reifendruck so weit abgesunken ist, daß der Druckverlust den Schwellenwert überschreitet, dann wird bei jeder folgenden, z.B. alle vier Sekunden stattfindenden, Messung der Sender eingeschaltet, weil der Schwellenwert überschritten ist, und dies so oft, bis der Fahrer eine Tankstelle angefahren und den Reifendruck korrigiert hat. Bis dahin wird jedoch viel Strom aus der Batterie für das Senden verbraucht. Erfindungsgemäß führt jedoch eine langsame, durch Diffusion verursachte Drift des Reifendrucks nicht zu einem Einschalten des Senders. Eine gefährliche Situation wird dadurch dennoch nicht hervorgerufen, weil so langsame Druckverluste durch in größeren Abständen erfolgende Kontrollen, z.B. bei jedem Tankstopp, ermittelt und korrigiert werden können. Die Kontrolle überläßt man zweckmäßigerweise jedoch nicht dem Fahrer bei Gelegenheit eines Tankstopps, sondern führt unabhängig davon, ob der Schwellenwert überschritten wurde oder nicht, in Zeitabständen, die groß sind gegenüber den Zeitabständen, in denen der Luftdruck regelmäßig überprüft wird (1 Sekunde bis 10 Sekunden), eine Meldung des aktuellen Reifendrucks an das im Fahrzeug an zentraler Stelle vorgesehene Empfangsgerät durch, in welchem die signalisierten Druckwerte verarbeitet und bewertet werden. Eine langsame Drift des Reifendrucks wird auf diese Weise in angemessenen, die Batterie im Ventil schonenden, längeren Zeitabständen erfaßt und dem Fahrer angezeigt, z.B. mit einem Hinweis, der ihm sinngemäß sagt: "Bitte beim nächsten Tankstopp den Reifendruck vorne rechts erhöhen". Geeignete Zeitabstände, in welchen unabhängig von dem Überschreiten eines vorgegebenen Schwellenwertes auf jeden Fall eine Information über den Reifendruck ge sendet wird, betragen zwischen einer Minute und einer Stunde, wobei die größeren Zeitabstände besonders bevorzugt sind.
- Der Aufbau des Ventils ist dadurch vereinfacht, daß kein Sensor benötigt wird, um die Bewegung des Ventilstößels zu überwachen.
- Dadurch, daß in der Überwachungseinrichtung im Ventil kein Vergleich mit einem absoluten Sollwert des Luftdrucks durchgeführt wird, muß an jener Stelle auch keine komplette Auswertung stattfinden, sondern lediglich eine Driftkontrolle. Alles weitere kann einem zentralen Auswerterechner überlassen werden. Das hat den weiteren Vorteil, daß die Reifendruckkontrolle zuverlässiger ist und von Bedienungsfehlern beim Reifendruckfüllen oder von Eichfehlern des Manometers am Füllgerät unabhängig ist. Findet der Ver gleich mit einem absolut vorgegebenen Solldruck erst in einem zentralen Rechner statt, dann kann dieser auch Fehler beim Befüllen anzeigen und eine sofortige Korrektur veranlassen; ferner können zentrale Vorgaben berücksichtigt werden, z.B. der Ladezustand (Gewicht der Zuladung, insbesondere bei Lastkraftwagen; Anzahl der beförderten Personen bei Bussen und Personenkraftwagen).

Für die Fahrsicherheit besonders gefährlich sind rasche Druckverluste infolge einer Beschädigung des Reifens oder seines Ventils. Solche Druckverluste können besonders zuverlässig ermittelt werden, weil die Meßintervalle (die "ersten" Zeitabstände) kurz und der Schwellenwert niedrig sein können, ohne die beim Stand der Technik mögliche Batterielebensdauer zu verkürzen. In vorteilhafter Weiterbildung der Erfindung ist vorgesehen, daß die "ersten" Zeitabstände verkürzt werden, sobald ein den Schwellenwert Δp übersteigender Druckverlust festgestellt wird. Ein einziger, den Schwellenwert übersteigender Druckverlust-Meßwert könnte auf einem zufälligen Meßfehler beruhen. Um zufällige Warnsignale auszuschalten, ist es vorteilhaft, nach einem den Schwellenwert überschreitenden Druckverlust-Meßwert die Situation dadurch zu klären, daß man weitere Messungen mit erhöhter Meßrate folgen läßt. Bestätigen die folgenden Messungen den Druckabfall, kann sehr rasch ein Warnsignal gesendet werden. Bestätigen die folgenden Messungen den Druckabfall jedoch nicht, ist klar, daß eine Fehlmessung vorlag, und der Sender wird erst gar nicht aktiviert. Auf diese Weise wird ohne Einbuße an Sicherheit die Batterie geschont und der Fahrer nicht durch Fehlmessungen irritiert. Während Druckmessungen mit der erhöhten Meßrate durchgeführt werden, ist in bevorzugter Weiterbildung der Erfindung eine Einstellung des Funkbetriebes ausgeschlossen, so daß gefährliche, schleichende ebenso wie rasche Druckverluste auf jeden Fall erkannt und signalisiert werden.

Ebenso, wie ein den Schwellenwert übersteigender Druckverlust festgestellt werden kann, kann auch ein den Schwellenwert Δp übersteigender Druckanstieg festgestellt werden. Dabei handelt es sich regelmäßig um den Befüllvorgang. In diesem Fall kann das Senden eines den Reifendruck wiedergebenden Signales zurückgestellt werden, bis sich der Reifendruck stabilisiert hat, der Befüllvorgang also beendet ist.

Sinken der Druckverlust und der Druckanstieg wieder unter den Schwellenwert Δp ab, werden die Zeitabstände, in denen der Reifendruck durch die im Ventil angeordnete Überwachungseinrichtung überprüft wird, wieder verlängert.

Praktisch kann zur Durchführung der Erfindung so verfahren werden: Solange der vom Drucksensor gemessene Druck kleiner ist als die zweite Druckschwelle (vorgewählter Absolutdruck), wird z.B. alle 60 Sekunden eine Druckmessung durchgeführt und geprüft, ob der gemessene Druck nach wie vor unterhalb dieser zweiten Druckschwelle liegt, die vorzugsweise ungefähr 1 bar über dem atmosphärischen Luftdruck liegt. Eine Datenübertragung durch Funk erfolgt so lange nicht. Wird jedoch ein Druck gemessen, der größer ist als die zweite Druckschwelle, dann wird die Funksperre aufgehoben und die Reifendrucküberwachungseinrichtung befindet sich in ihrem Normalbetriebszustand, in dem ein Sollwert-Istwert-Vergleich durchgeführt und unzulässig hohe Abweichungen per Funk signalisiert werden. Unterschreitet irgendwann der gemessene Druck wieder die zweite Druckschwelle, dann wird der Funkbetrieb wieder gesperrt, es sei denn, die Reifendrucküberwachungseinrichtung befindet sich im Zustand erhöhter Meßrate, die infolge eines schnellen Druckabfalles für eine feste Zeit von z.B. 180 Sekunden beibehalten wird. In dieser festen Zeit, in der mit erhöhter Meß-und Funkrate gearbeitet wird, kann der gefährliche Druckabfall signalisiert werden, und erst nach Ablauf dieser festen Zeit von z.B. 180 Sekunden wird der weitere Funkverkehr gesperrt, wenn die zweite Druckschwelle (der vorgegebene Absolutdruck) unterschritten und der gefährliche Druckabfall signalisiert wurden.

## Patentansprüche

1. Verfahren zum Betreiben von Einrichtungen an Rädern mit Luftreifen zum Signalisieren des Reifendrucks, d.i. der Luftdruck im Luftreifen,
worin ein Drucksensor in regelmäßigen Zeitabständen den Reifendruck mißt, eine Auswerteschaltung die Reifendruck-Meßwerte mit einem Solldruck vergleicht und bei Abweichungen des Reifendruck-Meßwertes vom Solldruck, die einen Schwellenwert Δp überschreiten, ein die Abweichung mitteilendes Signal an ein vom Rad getrennt angeordnetes Anzeigegerät funkt,
wobei die Einrichtung ihren Energiebedarf aus einer elektrischen Batterie deckt,
**dadurch gekennzeichnet**, daß solange, wie der vom Drucksensor gemessene Druck eine vorgewählte zweite Druckschwelle unterschreitet, der Funkbetrieb eingestellt wird.

2. Verfahren nach Anspruch 1, **dadurch gekennzeichnet**, daß die zweite Druckschwelle durch einen Absolutdruck gebildet ist.

3. Verfahren nach Anspruch 1, **dadurch gekennzeichnet**, daß der Funkbetrieb eingestellt wird, wenn der Reifendruck weniger als 1,2 bar über dem Umgebungsluftdruck liegt.

4. Verfahren nach Anspruch 1, **dadurch gekennzeichnet**, daß der Funkbetrieb eingestellt wird, wenn der Reifendruck weniger als 1,0 bar über dem Umgebungsluftdruck liegt.

5. Verfahren nach einem der vorstehenden Ansprüche zum Betreiben einer Reifendruck-Überwachungseinrichtung, deren Auswerteschaltung einen Analog-Digital-Wandler zum Digitalisieren des vom Drucksensor gewonnenen Drucksignals, einen Speicher zum Speichern des Drucksignals, einen Vergleicher, einen Funk-Sender und einen Zeitschalter hat, welcher die Einrichtung in den Zeitabständen für einen Meß- und Vergleichsvorgang aktiviert und in der übrigen Zeit zum Zwecke der Stromeinsparung abgeschaltet hält,
**dadurch gekennzeichnet**, daß der Vergleicher das Drucksignal speichert und, wenn die Abweichung des Drucksignals vom Vergleichsdrucksignal gebildet ist, mit diesem Drucksignal ein neues Vergleichsdrucksignal bildet, welches das vorher gespeicherte Vergleichsdrucksignal ersetzt.

6. Verfahren nach Anspruch 5, **dadurch gekennzeichnet**, daß das neue Vergleichsdrucksignal aus mehreren vorher vom Drucksensor gelieferten Drucksignalen gebildet wird.

7. Verfahren nach Anspruch 6, **dadurch gekennzeichnet**, daß das neue Vergleichsdrucksignal durch Mittelwertbildung aus den mehreren vom Drucksensor gelieferten und zuvor gespeicherten Drucksignalen gebildet wird.

8. Verfahren nach einem der Ansprüche 5 bis 7, **dadurch gekennzeichnet**, daß der Zeitschalter die Einrichtung in "ersten" Zeitabständen zwischen 1 Sekunde und 10 Sekunden aktiviert.

9. Verfahren nach Anspruch 8, **dadurch gekennzeichnet**, daß der Zeitschalter den Sender in "zweiten" Zeitabständen, welche groß gegen die "ersten" Zeitabstände sind, aktiviert und veranlaßt, ein Zustandssignal auch dann auszusenden, wenn keine den Schwellenwert Δp überschreitende Abweichung festgestellt wurde.

10. Verfahren nach Anspruch 9, **dadurch gekennzeichnet**, daß die "zweiten" Zeitabstände zwischen 1 Minute und 1 Stunde betragen.

11. Verfahren nach einem der Ansprüche 8 bis 10, **dadurch gekennzeichnet**, daß der Schwellenwert Δp und die "ersten" Zeitabstände, in denen die Einrichtung aktiviert wird, so aufeinander abgestimmt sind, daß der Quotient aus dem Schwellenwert Δp und dem "ersten" Zeitabstand groß ist gegen Reifendruckänderungsgeschwindigkeiten, welche bei dichtem Reifen und dichtem Ventil aufgrund von Änderungen der Reifentemperatur infolge des Fahrbetriebes typisch auftreten.

12. Verfahren nach einem der Ansprüche 8 bis 11, **dadurch gekennzeichnet**, daß ein schleichender Druckverlust, der unterhalb des Schwellenwertes Δp liegt, durch Auswertung der in den "zweiten" Zeitabständen gesendeten Zustandssignale (Reifendruckinformationen) ermittelt wird.

13. Verfahren nach einem der Ansprüche 8 bis 12, **dadurch gekennzeichnet**, daß dann, wenn eine den Schwellenwert Δp übersteigende Abweichung festgestellt wird, die "ersten" Zeitabstände, während derer in der Einrichtung die Druckmeß- und Vergleichsvorgänge ablaufen, verkürzt werden und der Sender dann aktiviert wird, wenn bei einer Anzahl von Druckmeß- und Vergleichsvorgängen, die während der verkürzten "ersten" Zeitabstände folgen, das Übersteigen des Schwellenwertes Δp bestätigt wird.

14. Verfahren nach Anspruch 13, **dadurch gekennzeichnet**, daß dann, wenn der Druckverlust oder der Druckanstieg wieder unter den Schwellenwert Δp absinken, die verkürzten "ersten" Zeitabstände wieder auf die ursprünglichen "ersten" Zeitabstände verlängert werden und erst daraufhin wieder ein neues Vergleichsdrucksignal gebildet wird.

15. Verfahren nach einem der vorstehenden Ansprüche, **dadurch gekennzeichnet**, daß die absoluten Reifendruckwerte im Empfangs- und Anzeigegerät verarbeitet und bewertet werden, wohingegen in der am Rad angeordneten Einrichtung die gemessenen Reifendruckwerte lediglich hinsichtlich einer Drift des Reifendrucks bewertet werden.

## Claims

1. A method for operating devices on wheels having pneumatic tyres to signal the tyre pressure, i.e. the air pressure in the pneumatic tyre,
in which a pressure sensor measures the tyre pressure at regular intervals, and an analysis circuit compares the tyre pressure readings with a reference pressure and, in the event of deviations of the tyre pressure reading from the reference pressure which exceed a threshold value Δp, transmits by radio, to an indicating device arranged separately from the wheel, a signal reporting the deviation,
where the device meets its energy needs from an electrical battery;
**wherein** radio operation is discontinued as long as the pressure measured by the pressure sensor is below a preselected second pressure threshold.

2. The method as defined in Claim 1, **wherein** the second pressure threshold is constituted by an absolute pressure.

3. The method as defined in Claim 1, **wherein** radio operation is discontinued if the tyre pressure is less than 1.2 bar above ambient atmospheric pressure.

4. The method as defined in Claim 1, **wherein** radio operation is discontinued if the tyre pressure is less than 1.0 bar above ambient atmospheric pressure.

5. The method as defined in one of the foregoing claims, for operating a tyre pressure monitoring device whose analysis circuit has an analog-digital converter for digitizing the pressure signal obtained from the pressure sensor, a memory for storing the pressure signal, a comparator, a radio transmitter, and a timing switch which activates the device at the time intervals for a measurement and comparison operation and keeps it switched off at other times in order to save power,
**wherein** the comparator stores the pressure signal and, when the deviation of the pressure signal from the comparison pressure signal has been formed, forms with said pressure signal a new comparison pressure signal which replaces the previously stored comparison pressure signal.

6. The method as defined in Claim 5, **wherein** the new comparison pressure signal is formed from multiple pressure signals previously supplied by the pressure sensor.

7. The method as defined in Claim 6, **wherein** the new comparison pressure signal is formed by averaging from the multiple pressure signals supplied by the pressure sensor and previously stored.

8. The method as defined in one of Claims 5 through 7, **wherein** the timing switch activates the device at "first" time intervals of between 1 second and 10 seconds.

9. The method as defined in Claim 8, **wherein** the timing switch activates the transmitter at "second" time intervals which are long compared with the "first" time intervals, and causes a status signal to be emitted even if a deviation exceeding the threshold value Δp has not been ascertained.

10. The method as defined in Claim 9, **wherein** the "second" time intervals are between 1 minute and 1 hour.

11. The method as defined in one of Claims 8 through 10, **wherein** the threshold value Δp and the "first" time intervals at which the device is activated are adjusted to one another so that the quotient of the threshold value Δp and the "first" time interval is large compared with rates of change in tyre pressure which typically occur, in the absence of leaks in the tyre or the valve, due to changes in tyre temperature as a result of vehicle operation.

12. The method as defined in one of Claims 8 through 11, **wherein** a gradual pressure loss which lies below the threshold value Δp is determined by analysis of the status signals (tyre pressure information elements) sent at the "second" time intervals.

13. The method as defined in one of Claims 8 through 12, **wherein** if a deviation exceeding the threshold value Δp is ascertained, the "first" time intervals during which the pressure measurement and comparison operations take place in the device are shortened, and the transmitter is activated if the fact that the threshold value Δp has been exceeded is confirmed for a number of pressure measurement and comparison operations which follow during the shortened "first" time intervals.

14. The method as defined in Claim 13, **wherein** if the pressure loss or pressure rise drops back below the threshold value Δp, the shortened "first" time intervals are lengthened again to the original "first" time intervals and only then is a new comparison pressure signal formed.

15. The method as defined in one of the foregoing claims, **wherein** the absolute tyre pressure values are processed and evaluated in the receiving and indicating device, whereas in the device arranged on the wheel, the measured tyre pressure values are evaluated only with regard to a drift in the tyre pressure.

## Revendications

1. Procédé pour le fonctionnement de mécanismes sur des roues équipées de bandages pneumatiques pour la signalisation de la pression des pneumatiques, c'est-à-dire de la pression de l'air dans le bandage pneumatique,
dans lequel un capteur de pression mesure à intervalles réguliers la pression du pneumatique, un circuit d'évaluation compare les valeurs de mesure de la pression du pneumatique à une valeur de consigne et, dans le cas de déviations de la valeur de mesure de la pression du pneumatique par rapport à la pression de consigne, qui dépassent une valeur seuil Δp, un signal radio d'avertissement de déviation est lancé sur un appareil d'affichage disposé à l'écart de la roue,
dans lequel le mécanisme couvre sa consommation d'énergie à partir d'une batterie électrique,
caractérisé en ce que, tant que la pression mesurée par le capteur de pression dépasse vers le bas un deuxième seuil de pression présélectionné, le lancement du message radio a lieu.

2. Procédé selon la revendication 1, caractérisé en ce que le second seuil de pression correspond à une pression absolue.

3. Procédé selon la revendication 1, caractérisé en ce que le lancement du message radio est déclenché lorsque la pression du pneumatique se situe à une valeur inférieure à 1,2 bar au-dessus de la pression de l'air atmosphérique.

4. Procédé selon la revendication 1, caractérisé en ce que le lancement du message radio est déclenché lorsque la pression du pneumatique se situe à une valeur inférieure à 1,0 bar au-dessus de la pression de l'air atmosphérique.

5. Procédé selon l'une quelconque des revendications précédentes pour le fonctionnement d'un mécanisme de surveillance de la pression des pneumatiques, dont le circuit d'évaluation comporte un convertisseur analogique-numérique pour numériser le signal de pression émis par le capteur de pression, une mémoire pour mémoriser la signal de pression, un comparateur, un émetteur de messages radio et un chronorelais qui active le mécanisme à des intervalles de temps pour procéder à une mesure et à une comparaison et qui, pour le reste du temps, le maintient hors-circuit à des fins d'économie de courant,
caractérisé en ce que le comparateur mémorise le signal de pression et, lorsqu'une dérivation du signal de pression apparaît par rapport au signal de pression de comparaison, forme, avec ce signal de pression, un nouveau signal de pression de comparaison qui remplace le signal de pression de comparaison mémorisé au préalable.

6. Procédé selon la revendication 5, caractérisé en ce que le nouveau signal de pression de comparaison est réalisé à partir de plusieurs signaux de pression fournis au préalable par le capteur de pression.

7. Procédé selon la revendication 6, caractérisé en ce que le nouveau signal de pression de comparaison est obtenu par le calcul d'une valeur moyenne provenant des différents signaux de pression fournis par le capteur de pression et mémorisés au préalable.

8. Procédé selon l'une quelconque des revendications 5 à 7, caractérisé en ce que le chronorelais active le mécanisme dans des "premiers" intervalles de temps entre 1 seconde et 10 secondes.

9. Procédé selon la revendication 8, caractérisé en ce que le chronorelais active l'émetteur dans des "seconds" intervalles de temps qui sont grands par rapport aux "premiers" intervalles de temps et permet le lancement d'un signal d'état même lorsqu'aucune déviation dépassant la valeur seuil Δp n'a été constatée.

10. Procédé selon la revendication 9, caractérisé en ce que les "seconds" intervalles de temps s' élèvent entre 1 minute et 1 heure.

11. Procédé selon l'une quelconque des revendications 8 à 10, caractérisé en ce que la valeur seuil Δp et les "premiers" intervalles de temps, dans lesquels le mécanisme est activé, sont adaptés l'un à l'autre de telle sorte que le quotient de la valeur seuil Δp et du "premier" intervalle de tempe est grand par rapport à des vitesses de modification de la pression du pneumatique qui interviennent de manière spécifique dans le cas d'un pneumatique hermétique et d'une soupape hermétique sur base de modifications de la température du pneumatique suite au déplacement du véhicule.

12. Procédé selon l'une quelconque des revendications 8 à 11, caractérisé en ce qu'une perte de pression furtive, qui est inférieure à la valeur seuil Δp, est déterminée par l'évaluation des signaux d'état (informations concernant la pression du pneumatique) envoyés pendant les "seconds" intervalles de temps.

13. Procédé selon l'une quelconque des revendications 8 à 12, caractérisé en ce que, lorsqu'une déviation dépassant la valeur seuil Δp est détectée, les "premiers" intervalles de temps, au cours desquels se déroulent dans le mécanisme les processus de mesure de la pression et de comparaison, sont raccourcis et l'émetteur est activé lorsque, au cours de plusieurs processus de mesure de la pression et de comparaison qui se suivent au cours des "premiers" intervalles de temps raccourcis, on constate le dépassement de la valeur seuil Δp.

14. Procédé selon la revendication 13, caractérisé en ce que, lorsque la perte de pression ou l'augmentation de pression descend à nouveau en dessous de la valeur seuil Δp, les "premiers" intervalles de temps raccourcis sont à nouveau prolongés pour correspondre aux "premiers" intervalles de temps initiaux, et seulement à ce moment un nouveau signal de pression de comparaison est formé.

15. Procédé selon l'une quelconque des revendications précédentes, caractérisé en ce que les valeurs de pression absolues des pneumatiques sont traitées et évaluées dans l'appareil de réception et d'affichage, tandis que, dans le mécanisme disposé sur la roue, on évalue les valeurs de pression mesurées du pneumatique uniquement en ce qui concerna une dérive de la pression du pneumatique.
